# EUROPEAN PATENT APPLICATION

(11) **EP 2 088 741 A1**
(43) Date of publication of application: **12.08.2009**
(21) Application number: 08290125.7
(22) Date of filing: 11.02.2008
(51) Int. Cl.: H04L 29/06

(54) **Method and OSGi bundle to enable sharing of a local service on an embedded device**

(71) Applicant: Alcatel Lucent, 75008 Paris (FR)
(72) Inventor: Justen, Pascal, 1150 Brussel (BE); Stevens, Christoph, 9190 Stekene (BE); Liekens, Werner, 2860 Sint-Katelijne-Waver (BE); Coppens, Jan, 9000 Gent (BE); Bouchat, Christèle, 2060 Antwerpen (BE); Acke, Willem, 2820 Rijmenam (BE)
(74) Representative: D'Halleweyn, Nele Veerle Trees Gertrudis

(57) **Abstract**

The present invention relates to a method to share a local service on an embedded device with another device.

According to the present invention, a method to share a local service on a first embedded device is provided, wherein said first embedded device comprises communication means arranged for the import and export of information, which is **characterized in that** information needed to use said service is exported by a distributing service, wherein said export is controlled by access granting policies, and that said distributing service is arranged to invoke said service in response to a remote service call to said service.

The present invention further provides an OSGi bundle for implementing said method.

## Description

The present invention relates to a method to share a local service on an embedded device with another device. To enable sharing, the embedded device comprises communication means which are arranged for the import and export of information.

The present invention further relates to an OSGi bundle that enables sharing of a local service on an embedded device.

Nowadays, a typical home network comprises a plurality of interconnected devices, e.g. a set-top box, a gateway, an MP3 player. Each of these devices is dedicated to offer one of more services to a user. These services are usually local services which means that they can only be used on that specific device. For example, a service that runs on the gateway cannot be used by other devices in the network unless the program that runs on the gateway is adapted to do so. Furthermore, these devices are typically embedded devices that have only a limited amount of resources available unlike a personal computer. The resources in an embedded device are mostly just sufficient to enable the targeted services.

When a centralized approach is required, a user may wish to use a service that runs on one device within other devices. An example could be the sharing of a common directory in the home, a logging service or an alerting service. In addition, sharing is necessary when a device lacks a service because it may fail to install it due to for instance memory usage issues, or not being reachable for automatic deployment.

If a user wishes to share a local service that is offered by an embedded device with another device, the source code pertaining to this service has to be changed, compiled and re-installed so that the service is able to communicate with other devices. Of course, the embedded device has to be provided with communication means and an underlying communication protocol. The task of modifying the source code is very impractical if at all possible. First of all, the user must be able and allowed to extract the source code, which typically is not available because the embedded device only contains the machine code. And even if the source code can be extracted or otherwise obtained, e.g. downloading from the Internet, the user faces the difficult task of modifying the source code.

The object of the present invention is to enable the sharing of a local service on an embedded device with another device without, or at least to a lesser extent, the abovementioned modifications to the local service with their associated difficulties.

This object is achieved by exporting the information that is needed to use the local service by a distributing service wherein the distributing service is arranged to invoke the local service in response to a remote service call to this service.

The distribution service is a separate service that runs on the embedded device. It can either be installed on the embedded device or form a part of the operating system/framework on the device.

The distribution service distributes the information that is needed to use the service on the embedded device to other devices. Preferably, the connection between the different devices is based on a peer-to-peer network, although other network topologies are not excluded. An example of another device could be another embedded device, or another part of the same device that for instance runs a different software platform. In this latter case, the different devices all pertain to the same physical device. The present invention does not exclude other types of devices.

In addition, the distribution service is arranged to invoke the service in response to a remote service call to said local service. For example, a MP3 player has the local service to play an MP3 file. In this case, the distribution service distributes information on how this service can be used by other devices. Based on this information, another device can issue a remote service call to the MP3 player. In response to this remote service call, the distribution service invokes the service and an MP3 file is played. For the scope of the present invention it is irrelevant whether the MP3 file is played on the embedded device or that the MP3 file is decoded and transmitted to the other device. In both cases, the decoding service of an MP3 file is shared.

The distribution of services, which can be automatic, leads to an important security issue. Service Providers might only allow sharing of information needed to use a service, e.g. a service object, among a restricted group of applications or devices, mostly enforced due to strict licensing and/or legal conditions. For each application that uses a service object, extra resources are used on the device that offers the service object. Therefore, the present invention protects the device that offers the service object from overload conditions (which induces overall service degradation). This is important for service providers that want to guarantee quality of experience. Limited resources are memory, cpu cycles consumption, network/traffic load, etc. In order to solve this problem, distribution of the aforementioned information or service objects should be controlled via access granting policies which preferably can be set remotely.

The advantages of using the distribution service according to the present invention is that it can be installed on an embedded device without having to modify the source code of the service to enable sharing. Installing the distribution service can, in most cases, be done remotely. This offers the possibility for service providers to increase the functionality of their products.

Communication between devices, e.g. in the home network, is based on a certain communication protocol, e.g. Universal Plug and Play (UPnP) Service Location Protocol (SLP, e.g. used by R-OSGi). Most of these protocol support control messages to be exchanged between devices, for instance the UPnP protocol uses SSDP messages for discovery and device advertising, and UPnP Services are invoked by means of UPnP action templates over SOAP.

According to the present invention, the distribution service can be arranged to convert the information pertaining to the service that needs to be shared to enable communication protocol specific service sharing. In this way, the distribution service functions as a bridge between communication protocol specific control messages on one side and local service calls on the other side.

Similar techniques as the aforementioned access granting policies could be used to control the use of the service. For instance, a device using communication protocol specific service sharing to use a service on another device may comprise access granting policies that control the use or import of said service, which are dependent or independent from the aforementioned granting policies, and could be remotely or locally configurable.

Additional or alternative benefits can be obtained if a second device, that wishes to use a service on the first embedded device, comprises a proxy service arranged to setup a proxy of said service. In this case, information distributed by the distributing service is received by the second device and a proxy to said service is setup accordingly. This proxy service is a separate service that runs on the second device. It can either be installed on the second device or form a part of the operating system/framework on the second device. Also the proxy itself, or process of setting up the proxy, may be subjected to access granting policies, independent or dependent from the aforementioned granting policies, and could be remotely or locally configurable.

Using a proxy service has the advantages that services on the second device 'see' the service-by-proxy as if it was a local service. This eliminates, or at least reduces, the modifications needed of the services on the second device to enable the use of the service-by-proxy.

The present invention is particularly well suited for the application in service frameworks, e.g. OSGi or .NET compact framework.

An OSGi service framework is a layer on top of a Java virtual machine (JVM). It enables remote installing, running, updating and maintaining of services. These services are installed by means of OSGi bundles. Moreover, these services can interact as well as share code. Consequently, the memory footprint to run services that have a substantial amount of common code can be significantly reduced. In addition, the OSGi framework is dynamic. Services can be installed, started or stopped without having to interrupt the operation of the device.

Because it runs on a JVM, an OSGi service framework, as well as the services for it, are device independent. All the device specific hardware requirements are incorporated in the JVM. The JVM forms a uniform interface to the software installed on it, hence the software developer does not need to worry about the hardware specific software requirements.

A typical embedded device, e.g. an MP3 player or a mobile phone, comprises one OSGi framework. The framework mainly deals with the communication between services within the framework. It is not concerned with the sharing of services between different frameworks. This functionality can however be offered by implementing the present invention. Although mentioned with respect to an OSGi framework, similar advantages can be obtained with comparable service frameworks, e.g. a .NET compact framework.

Further or alternative improvements can be achieved if the distributing service and proxy service are different parts of a separate service which is installed on the first embedded device and the second device. By installing the same service on the embedded device and the second device, service sharing can be achieved. This assumes that both devices support the same platform or operating system, or at least are compatible. A user who wishes to share a service on an embedded device with another device by setting up a proxy to this service, only needs to install the abovementioned service on both devices. This installation could also be done remotely by the provider.

If services on known OSGi frameworks wish to communicate with services on other devices or frameworks, they must use communication means, e.g. middleware, employing a certain protocol, e.g. UPnP, WebServices, remote method invocation (RMI) etc. However, the link between the service and the communication means is not an automatic process. A middleware follows a certain architecture that an application must comply with. This means that existing code needs to be manually adapted or ported, sometimes requiring radical re-factoring, which increases the risk to introduce bugs, compatibility and inter-working issues. The ported code needs to be recompiled, bundled and redeployed on all concerned OSGi frameworks.

If a complementary set of services is used, like the combination of the distribution service and the proxy service mentioned above, the exact protocol that is used between the first and second device becomes less relevant. In this case, no protocol specific control commands need to be used. Instead all the communication can be done over the data channel. The service that needs to be shared does not need to comply with, and consequently does not have to be adapted to, the specifics of a certain communication protocol.

In OSGi based devices, a service registry is used to monitor the services which are available in the system. This monitoring is done dynamically. A service that is started, registers itself with the service registry. Based on this registration, other devices are notified that the service is available. Apart from availability information, the service registry also provides information on how the service can be used. The OSGi Service Registry permits to export meta-data that a service object client might read and interpret for further processing.

For OSGi based devices it is advantageous if the information needed by the distribution service, by the combined service described above or by another further development, is based on the information obtained from the service registry. For instance, a service registers itself with the service registry. Consequently, the distribution service detects this service, extracts information from the service registry about the use of this service and distributes this information to the second device. In this second device, this information is used to setup a proxy. To improve the flexibility of the system, it is convenient if this process is dynamic. If the service on the first embedded device is stopped and removes its entry in the service registry, the distribution service and proxy service should act accordingly. In this case, the proxy service should then stop the service-by-proxy in the second device.

Other sources of information are not excluded by the present invention. For instance, Java reflection technology can be used to extract the needed information to share the local service. The skilled person in the art will appreciate the fact that other options or technologies are possible without deviating from the scope of the present invention.

If the second device is also OSGi based, the proxy service can initiate a service-by-proxy which can register itself with the service registry of the second device. Other services on the second device get notified about this new service and can subsequently use this service. As mentioned above, these services treat this new service as a local service. In this way, the functionality of the second device can be increased by the shared service from the first embedded device.

The invention further provides an OSGi bundle to enable sharing of a local service on a first embedded device. The first embedded device comprises an OSGi service framework on which said service is installed and it comprises communication means arranged for the import and export of information. The bundle is **characterized in that** it is arranged to export information pertaining to said service and in that it invokes said service in response to a remote service call to said service.

In a further development of this OSGi bundle, it is arranged to setup a proxy to a local service on a different OSGi framework in response to receiving information pertaining to said service. This corresponds mainly to the combination of the distribution service and proxy service mentioned above.

Normally, it is assumed that the abovementioned OSGi bundle, or its counterpart in another technology, is implemented on the same device as the service that needs to be exported or shared. However, in some cases, limited resources on devices may prevent the installation of such bundle or service. Next, a possible solution for this problem according to the present invention will be discussed.

As an example, assume a device 1, e.g. a MP3 streamer, and a device 2, e.g. a MP3 player. Both devices are capable of communicating with each other by means of the UPnP protocol, although other protocols are not excluded. Hence, device 2 can instruct device 1 to play a certain file or to list its contents. However, there is no possibility to actually have a music stream from device 1 to device 2 because no such data channel exists between the two devices.

Music streaming between device 1 and device 2 can be obtained by using a third device (device 3), which implements a sharing service according to the present invention. In this case, device 3 offers the service "data channel between device 1 and device 2" to devices 1 and 2. Access granting policies can be set for this data channel. For instance, the data channel may only be available for certain content, certain users, or only between certain devices. In this case, device 1 and device 2 can access the data channel using UPnP.

Although mentioned explicitly with respect to an OSGi bundle, it should be apparent to the skilled person in the art, that a similar approach can be followed for other frameworks or operating systems, e.g..NET compact framework, and that such an approach falls within the scope of the present invention.

In the following, the present invention will be discussed in more detail with reference to the accompanying drawings in which:
Figure 1 shows an OSGi implementation of the present invention; and
Figures 2A and 2B show different examples of possible access granting policies according to the present invention.

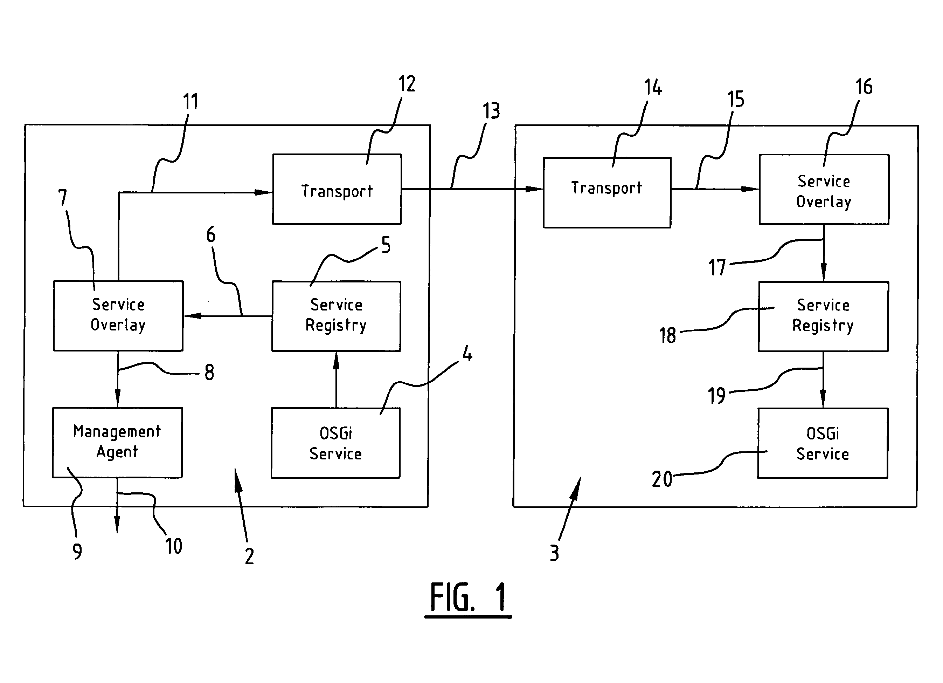

Figure 1 shows the functionality of an OSGi bundle according to the present invention (service overlay). As a first step 1, an OSGi bundle on a first device 2, of which a user wants to share a service with a second device 3, registers his service object 4 with the OSGi Framework through the local service registry 5. Subsequently 6, the service overlay 7, listening to all service object registrations, gets notified about the availability of the new service object. It asks permission 8 from the management agent 9 to export this service object in the network, and to the second device 3 in particular. In case no security policy exists for this service, the management agent can, according to the default policy, ask the home security manager for permission 10, accept any exportation or deny any exportation. If exportation is permitted, the service overlay 7 instructs 11 the communication means 12 to distribute 13 the information pertaining to the new service object in the network, more particularly to the second device 3. Information sent could comprise but is not limited to 1) the name of the service 2) the formal description of the service (e.g. type and method layout or schema). In response to this distribution, communication means 14 of the second device 3 receive the information and forward 15 it to the corresponding service overlay 16 on the second device 3. Based on the received service information, this peer service overlay instantiates a service object invocation stub. This stub is a proxy for the service on the first embedded device 2. The peer service overlay registers 17 the invocation stub into the service registry 18 of the second device. This peer service registry publishes 19 the new service object, and a peer OSGi service or client application 20 gets notified about the availability of the new service object and is able to use it.

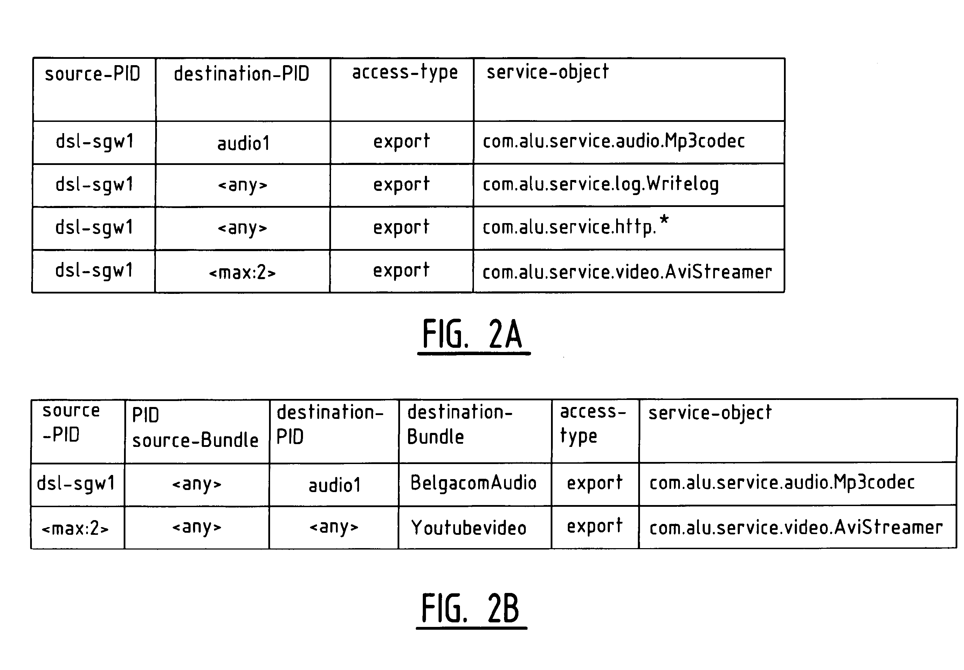

In figure 2A, an example of access granting policies is shown. In this embodiment the access policies are implemented using the OSGi Platform ID (PID) and the service object name. The PID is a unique identifier for an OSGi service platform.

The first row indicates that a DSL service gateway *dsl-sgw1* is allowed to export information about a MP3 codec service, i.e. the *com.alu.service.audio.Mp3codec* service object, to the hifi audio set *audio1*. The second row indicates that a log writing service *com.alu.service.log.Writelog* can be exported to any OSGi service platform, which in this case is limited to OSGi service platforms in the home network pertaining to the DSL service gateway. The third row expresses that any service object belonging to the HTTP package can be exported to any OSGi service platform in the home network. The fourth row indicates that a maximum of 2 OSGi service platforms may use the *com.alu.service.video.AviStreamer* service object.

In figure 2B, the access policies are extended by incorporating the use of extra parameters such as the source and or destination bundle name.

In the first row in figure 2B, the DSL service gateway *DSL-sgw1* allows any bundle on the DSL service gateway *DSL-sgw1* to export the *com.alu.service.audio.Mp3codec* service object. Only the bundle with the name BelgacomAudio residing on a device with service platform *audio1* (hifi) is allowed to use the codec.

In the second row, a maximum of 2 devices, which run the bundle *com.alu.service.video.AviStreamer* but of which a name is not specified, may export this service object to any service platform that runs the *YoutubeVideo* service.

## Claims

1. A method to share a local service on a first embedded device, said first embedded device comprising communication means arranged for the import and export of information, **characterized in that** information needed to use said service is exported by a distributing service, wherein said export is controlled by access granting policies, and that said distributing service is arranged to invoke said service in response to a remote service call to said service.

2. The method of claim 1, **characterized in that** said access granting policies can be set remotely.

3. The method of claim 1, **characterized in that** said information is converted by said distributing service to enable communication protocol specific service sharing.

4. The method of claim 1, further comprising the reception of said information by a second device, **characterized in that** said second device comprises a proxy service arranged to setup a proxy of said service in accordance with said information.

5. The method of claim 1, **characterized in that** said first embedded device is based on an OSGi service framework.

6. The method of claim 1, **characterized in that** said first embedded device is based on a .NET compact framework.

7. The method of claim 4, **characterized in that** said distributing service and said proxy service are different parts of a separate service which is installed on said first embedded device and said second device.

8. The method of claim 5, **characterized in that** said information is obtained dynamically from a service registry in said OSGi network.

9. An OSGI bundle to enable sharing of a local service on a first embedded device, said first embedded device comprising an OSGi service framework on which said service is installed, said first embedded device comprising communication means arranged for the import and export of information, **characterized in that** said OSGi bundle is arranged to export information pertaining to said service.

10. The OSGi bundle of claim 9, further **characterized in that** said OSGi bundle is arranged to setup a proxy to a remote service of a different OSGi framework in response to receiving information pertaining to said remote service.
